# EUROPEAN PATENT SPECIFICATION

(11) **EP 4 376 191 B1**
(45) Date of publication and mention of the grant of the patent: **04.03.2026**
(21) Application number: 23843280.1
(22) Date of filing: 14.07.2023
(51) Int. Cl.: H01M 50/264, H01M 50/209, H01M 50/24, H01M 10/44, H01M 50/317, H01M 50/342, H01M 50/249, H01M 50/211, H01M 50/105, H01M 50/271, H01M 50/30, H01M 50/367, H01M 50/375, H01M 50/383

(54) **BATTERY CELL BLOCK, AND BATTERY PACK AND VEHICLE INCLUDING THE SAME**
BATTERIEZELLENBLOCK UND BATTERIEPACK SOWIE FAHRZEUG DAMIT
BLOC D'ÉLÉMENTS DE BATTERIE, BLOC-BATTERIE ET VÉHICULE LES COMPRENANT

(30) Priority: 20.07.2022 KR 20220089866; 27.04.2023 KR 20230055789
(43) Date of publication of application: 29.05.2024
(73) Proprietor: LG Energy Solution, Ltd., Seoul 07335 (KR)
(72) Inventor: PARK, Jin-Yong, Daejeon 34122 (KR); KWON, Woo-Yong, Daejeon 34122 (KR); LEE, Myung-Woo, Daejeon 34122 (KR); KIM, Seung-Joon, Daejeon 34122 (KR); KIM, In-Soo, Daejeon 34122 (KR); CHUNG, Se-Yun, Daejeon 34122 (KR); CHI, Ho-June, Daejeon 34122 (KR)
(74) Representative: Plasseraud IP
(86) International application number: PCT/KR2023/010084
(87) International publication number: WO 2024/019430

(56) References cited:
- CN-B- 102 376 992
- CN-U- 210 723 151
- GB-A- 2 598 534
- JP-A- 2007 265 658
- KR-A- 20150 096 885
- KR-A- 20150 096 885
- KR-A- 20210 004 188
- KR-A- 20220 021 143
- KR-B1- 102 044 253
- KR-B1- 102 187 163
- US-A1- 2018 190 954

## Description

### TECHNICAL FIELD

The present application claims priority to Korean Patent Application No. 10-2022-0089866 filed on July 20, 2022 in the Republic of Korea and Korean Patent Application No. 10-2023-0055789 filed on April 27, 2023 in the Republic of Korea.

The present disclosure relates to a battery cell block, and a battery pack and a vehicle including the same, and more particularly, to a battery cell block in which a plurality of cell units may be efficiently seated and fixed in a pack case, and a battery pack and a vehicle including the battery cell block.

### BACKGROUND ART

As technology development and demand for various mobile devices, electric vehicles, and energy storage systems (ESSs) increase significantly, interest in and demand for secondary batteries as energy sources are rapidly increasing. Nickel cadmium batteries or nickel hydride batteries have been widely used as conventional secondary batteries, but recently, lithium secondary batteries, which have almost no memory effect compared to nickel-based secondary batteries and thus have advantages of free charge/discharge, very low self-discharge rate, and high energy density, have been widely used.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case.

**In** general, according to a shape of a casing, secondary batteries may be classified into can-type batteries in which an electrode assembly is received in a metal can, and pouch-type batteries in which an electrode assembly is received in a pouch of an aluminum laminate sheet.

Recently, battery packs have been widely used for driving or energy storage in medium and large-sized devices such as electric vehicles or ESSs. A conventional battery pack includes one or more battery modules and a control unit, for example, a battery management system (BMS) for controlling charging and discharging of the battery pack, in a pack case. The battery module includes a plurality of battery cells in the pack case. That is, in a conventional battery pack, a plurality of battery cells (secondary batteries) are accommodated in a module case to form each battery module, and one or more battery modules are accommodated in the pack case to form a battery pack.

In particular, pouch-type batteries have various advantages of light weight and small dead space when stacked, but are vulnerable to external impact and have poor assemblability. Accordingly, it is common to manufacture a battery pack by first modularizing a plurality of cells and then accommodating the plurality of cells in a pack case.

However, a conventional battery pack may be disadvantageous in terms of energy density, assemblability, cooling, etc. due to modularization. Accordingly, recently, attempts have been made to develop a cell-to-pack (CTP)-type battery pack. However, there are several problems. For example, an assembly process of stacking soft pouch cells in a pack is not easy and it is difficult to stably fix the soft pouch cells. Moreover, it is difficult for the conventional battery pack to ensure stability during venting.

JP 2007 265658 A relates to an energy storage element module. CN 102 376 992 B relates to a battery module having a plurality of batteries. US 2018/190954 A1 relates to a power supply device and a vehicle equipped with the power supply device.

### DISCLOSURE

### Technical Problem

The present disclosure is designed to solve the problems of the related art, and therefore the present disclosure is directed to providing a battery cell block in which blocked cell units are efficiently fixed and stable venting is ensured, and a battery pack and a vehicle including the battery cell block.

However, technical objectives to be achieved by the present disclosure are not limited thereto, and other unmentioned technical objectives will be apparent to one of ordinary skill in the art from the description of the present disclosure.

### Technical Solution

According to the invention, there is provided a battery cell block including a plurality of cell units including one or more pouch-type battery cells and a cell cover configured to surround the one or more pouch-type battery cells, the plurality of cell units being stacked in at least one direction, and a fixing member configured to fix a stacked state of the plurality of cell units by surrounding a stack of the plurality of cell units.

Still according to the invention, a venting hole through which gas is discharged is formed in the cell cover, and the fixing member is configured to close the venting hole.

In an embodiment, a plurality of venting holes may be formed, wherein one fixing member is configured to close the plurality of venting holes.

In an embodiment, the fixing member may surround the stack of the plurality of cell units to correspond to a stacking direction of the plurality of cell units.

Still according to the invention, the fixing member is configured to be opened by an ejection pressure or temperature of a material ejected from the venting hole.

In an embodiment, a cut portion or a notch portion may be formed in a portion of the fixing member corresponding to the venting hole.

In an embodiment, a jig insertion portion into which a jig may be inserted may be formed in the fixing member.

In an embodiment, the jig insertion portion may be formed at an upper corner portion of the fixing member.

In an embodiment, the cell cover may include a first cover portion covering one side surface of at least one of the plurality of battery cells, a second cover portion covering the other side surface of at least one of the plurality of battery cells, and a third cover portion connecting the first cover portion to the second cover portion and covering an upper end portion of the at least one battery cell, wherein the venting hole is formed in the third cover portion, wherein the fixing member is configured to contact the third cover portion and close the venting hole.

In an embodiment, the cell cover may be configured to support the one or more pouch-type battery cells in an erected state.

In one aspect of the present disclosure, there is provided a battery pack including the battery cell block, and a pack case having an inner space in which the battery cell block is accommodated.

In an embodiment, the cell cover may partially surround the pouch-type battery cell to form an open portion through which at least one side of the surrounded pouch-type battery cell is exposed toward the pack case.

In an embodiment, the battery pack may include a control module configured to control charging and discharging of the pouch-type battery cells.

In one aspect of the present disclosure, there is provided a vehicle including the battery cell block described above.

In one aspect of the present disclosure, there is provided a vehicle including the battery pack described above.

### Advantageous Effects

According to one aspect of the present disclosure, cell units including pouch cells may be blocked and the blocked cell units may be efficiently fixed.

Also, according to one aspect of the present disclosure, because a venting hole of each cell unit is covered not to be exposed in a normal state, a foreign material may be prevented from penetrating into a battery cell. Moreover, a configuration of covering the venting hole may be achieved together by a configuration of fixing a pouch cell unit block.

Also, according to one aspect of the present disclosure, when thermal runaway occurs in a specific battery cell, it is possible to effectively respond to a thermal event. In particular, in the present disclosure, from among three elements (fuel, oxygen, and ignition source) with which a flame is generated, the accumulation or discharge of heat corresponding to the ignition source may be blocked or appropriately controlled. Moreover, in the present disclosure, because venting gas is rapidly and smoothly discharged, heat accumulation may be prevented and an explosion due to increased internal pressure may be prevented.

According to one aspect of the present disclosure, a plurality of pouch-type battery cells may be stably accommodated in a pack case, even without a stacking frame such as a plastic cartridge or a separate pack case.

Furthermore, according to one aspect of the present disclosure, a pouch-type battery cell having a case formed of a soft material may be easily made into a sturdy form, and thus, a configuration in which the pouch-type battery cell is directly stacked in a pack case may be more easily implemented. Accordingly, the assemblability and mechanical stability of a battery pack or a battery module may be improved.

Also, according to one aspect of the present disclosure, cooling performance and energy density may be improved by removing a module case as a cell-to-pack (CTP) concept.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view illustrating a battery cell block according to an embodiment of the present disclosure.
FIG. 2 is an exploded perspective view illustrating some elements of FIG. 1.
FIG. 3 is a view illustrating a modified embodiment of a fixing member of FIGS. 1 and 2.
FIG. 4 is a view illustrating another modified embodiment of the fixing member of FIGS. 1 and 2.
FIG. 5 is a perspective view illustrating one cell unit included in a battery cell block according to an embodiment of the present disclosure.
FIG. 6 is an exploded perspective view of FIG. 5.
FIG. 7 is a cross-sectional view taken along line A-A' of FIG. 5.
FIG. 8 is a view illustrating a modified embodiment of the battery cell block of FIG. 1.
FIG. 9 is a view illustrating another modified embodiment of the battery cell block of FIG. 1.
FIG. 10 is an exploded perspective view illustrating a battery pack according to an embodiment of the present disclosure.
FIG. 11 is a view for describing a vehicle including a battery pack according to an embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when members are "coupled" or "connected" to each other, the members may be directly coupled or connected to each other, or may be indirectly coupled or connected to each other with an intervening member therebetween.

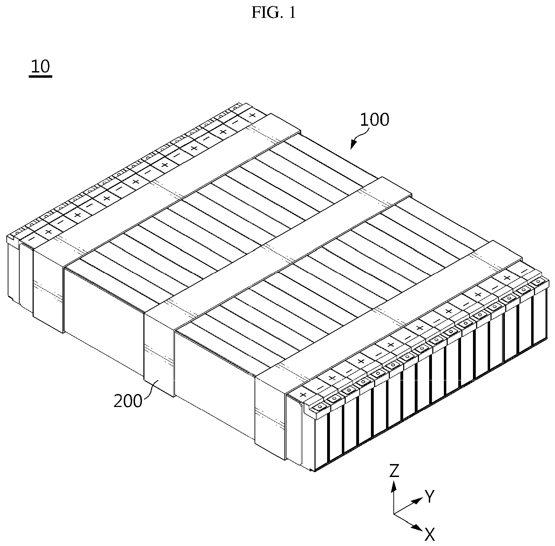

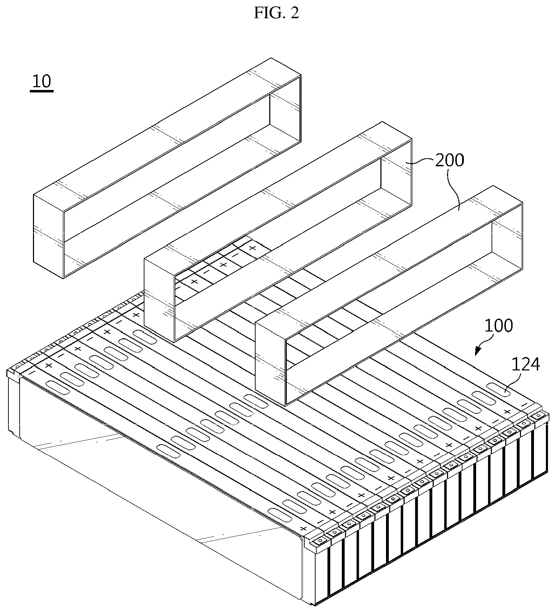

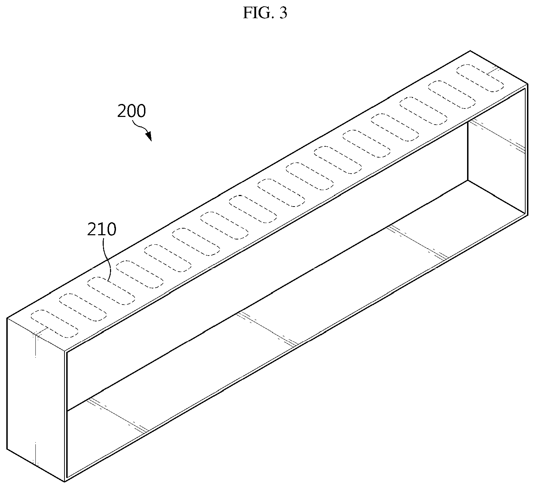

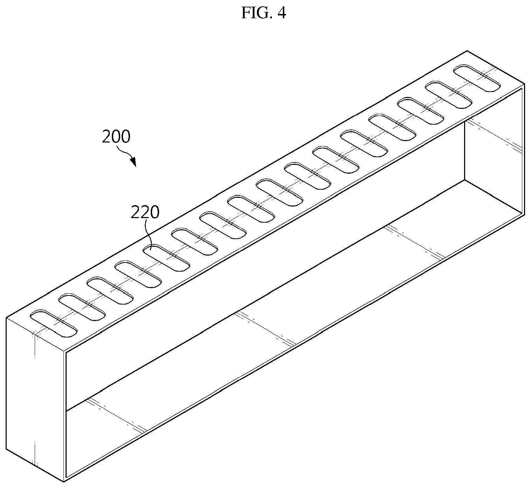

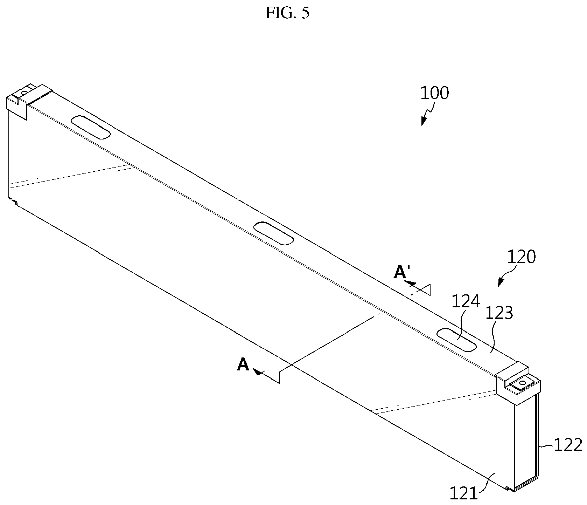

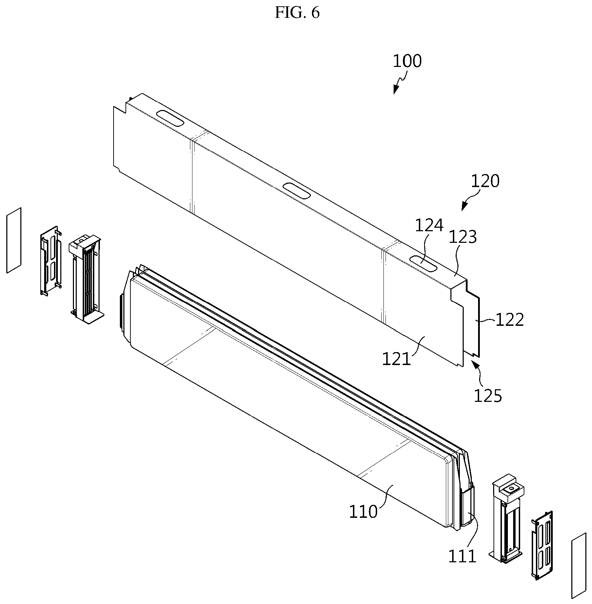

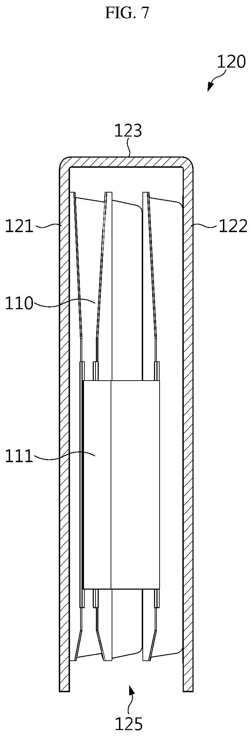

FIG. 1 is a schematic perspective view illustrating a battery cell block according to an embodiment of the present disclosure. FIG. 2 is an exploded perspective view illustrating some elements of FIG. 1. FIG. 3 is a view illustrating a modified embodiment of a fixing member of FIGS. 1 and 2. FIG. 4 is a view illustrating another modified embodiment of the fixing member of FIGS. 1 and 2. FIG.5 is a perspective view illustrating one cell unit included in a battery cell block according to an embodiment of the present disclosure. FIG. 6 is an exploded perspective view of FIG. 5. FIG. 7 is a cross-sectional view taken along line A-A' of FIG. 5.

Referring to FIGS. 1 and 2, a battery cell block 10 according to an embodiment of the present disclosure includes a plurality of cell units 100 and a fixing member 200.

Referring to FIGS. 5 to 7, the cell unit 100 may include a battery cell 110 and a cell cover 120, and as shown in FIGS. 1 and 2, the plurality of cell units 100 provided in the battery cell block 10 are stacked in at least one direction.

One or more battery cells 110 that are pouch-type battery cells 110 may be provided. For example, one battery cell 110 may be provided in each cell unit 100, two battery cells 110 may be provided in each cell unit 100, or three battery cells 110 may be provided in each cell unit 100. Alternatively, four or more battery cells 110 may be provided in each cell unit 100.

The pouch-type battery cell 110 that is a pouch-type secondary battery may include an electrode assembly, an electrolyte, and a pouch casing. That is, the battery cell 110 corresponds to a basic unit for charging and discharging, and may be manufactured by accommodating an electrode assembly and an electrolyte material in a soft metal case and sealing the metal case. In this case, the electrode assembly may be manufactured by locating a separator between a positive electrode and a negative electrode.

Also, electrode leads 111 electrically connected to the electrode assembly may be provided at a front end and a rear end of the battery cell 110. The battery cell 110 may be a pouch-type battery cell. When a plurality of pouch-type battery cells 110 are included in each cell unit 100, the plurality of cell units 100 may be stacked in at least one direction, for example, a left-right direction, with receiving portions of the cell covers 120 facing each other.

Referring to FIGS. 5 to 7, the cell cover 120 may be provided to at least partially surround at least some of the plurality of pouch-type battery cells 110. Referring to FIG. 7, the cell cover 120 may be configured to at least partially surround three pouch-type battery cells 110. However, three battery cells 110 are only one embodiment, and the present disclosure is not limited thereto.

The cell cover 120 may partially surround the pouch-type battery cell 110 so that at least one side of the pouch-type battery cell 110 surrounded by the cell cover 120 is exposed to the outside.

The cell cover 120 may be configured to surround the battery cell 110 accommodated therein. In particular, the cell cover 120 may be configured to stably support an upright state of the battery cell 110 accommodated therein.

In detail, the cell cover 120 may be configured to support the pouch-type battery cell 110 in an upright state. In general, it is not easy to stack the pouch-type battery cells 110 in a vertical direction. However, in a battery pack 1 according to an embodiment of the present disclosure, the cell cover 120 may be configured to surround one or more pouch-type battery cells 110 and support the surrounded battery cells 110 in an upright state, that is, an erected state.

Referring to FIGS. 5 and 6, the cell cover 120 may include a first cover portion 121, a second cover portion 122, and a third cover portion 123.

The first cover portion 121 may be configured to cover one side surface of at least one of the plurality of battery cells 110. The first cover portion 121 may extend downward from one end of the third cover portion 123. For example, the first cover portion 121 may extend long from a left end of the third cover portion 123 downward. The first cover portion 121 may surround a wide surface of the battery cell 110 accommodated therein.

The second cover portion 122 may be configured to cover the other side surface of at least one of the plurality of battery cells 110. The second cover portion 122 may be horizontally spaced apart from the first cover portion 121. The second cover portion 122 may extend from the other end of the third cover portion 123 downward. For example, the second cover portion 122 may extend long from a right end of the third cover portion 123 downward. The second cover portion 122 may be configured to surround a wide surface of the battery cell 110 accommodated therein.

The third cover portion 123 connects the first cover portion 121 to the second cover portion 122 and covers an upper end portion of at least one battery cell 110. A venting hole 124 through which gas is discharged may be formed in the third cover portion 123.

Referring to FIG. 7, when the cell cover 120 includes the first cover portion 121, the second cover portion 122, and the third cover portion 123, a cross-sectional shape of the cell cover 120 viewed from a front side may be roughly similar to an 'n' shape. Accordingly, in this case, the cell cover 120 may be referred to as an 'n-fin'.

Although not shown, in a modified embodiment, the cell cover 120 may be configured to surround both side surfaces and a lower edge of at least one pouch-type battery cell 110. In this case, a cross-sectional shape of the cell cover 120 viewed from a front side may be roughly similar to a 'U' shape. In this case, the cell cover 120 may include two side cover portions and a lower cover portion. The venting hole 124 may be formed in the lower cover portion. The fixing member 200 may be configured to cover the venting hole 124 of the lower cover portion.

At least some of the plurality of pouch-type battery cells 110 may be adhered and fixed to inner surfaces of the first cover portion 121 and the second cover portion 122. A member for adhesion may be thermally conductive. Through the adhesion, the cell cover 120 may be firmly coupled to the battery cell 110, and may help discharge heat generated in the battery cell 110 to the outside of the battery cell 110.

Referring to FIGS. 2, 5, and 6, at least one venting hole 124 for discharging a flame or gas is formed in the cell cover 120. The venting hole 124 may pass through the cell cover 120 to discharge gas from an inner space of the cell cover 120 to the outside. The venting hole 124 is closed by the fixing member 200 described below.

A various number of venting holes 124 may be formed at various positions of the cell cover 120 according to a pre-intended venting direction. For example, the venting hole 124 may be formed in the third cover portion 123, and although three venting holes 124 are formed in the third cover portion 123 in FIGS. 2, 5, and 6, the number of venting holes 124 is not limited thereto.

As such, when the venting hole 124 is formed in the third cover portion 123, gas or the like may be discharged upward. Accordingly, because gas or flame generated during thermal runaway of the battery cell 110 is discharged in an intended direction, for example, toward an upper side where other battery cells 110 or other battery modules are not located, chain thermal runaway may be prevented.

The cell cover 120 partially surrounds the battery cell 110 to form an open portion 125 through which at least one side of the surrounded battery cell 110 is exposed toward a pack case 20, which will be described in detail in an embodiment related to the battery pack 1.

The cell cover 120 may be integrally formed. In this case, the cell cover 120 may be formed by bending a metal plate having a plate structure. That is, the cell cover 120 may be formed by bending one plate.

The cell cover 120 may be formed of a metal material. For example, the cell cover 120 may be formed of steel, and particularly, may be formed of a material including stainless steel (SUS), which has easy processability, high corrosion resistance, and excellent mechanical strength or rigidity. However, the present disclosure is not limited thereto, and the cell cover 120 may be formed of any of various materials other than SUS to ensure rigidity. For example, the cell cover 120 may be formed of a chromium (Cr)-based metal material.

When the cell cover 120 is formed of a metal material, the cell cover 120 may more stably maintain a state in which the battery cells 110 are stacked and more safely protect the battery cells 110 from external impact. Also, as an example, when the cell cover 120 is formed of a steel material such as SUS, the overall structure may be stably maintained when a flame is generated from the battery cell 110 due to a high melting point. In particular, because a steel material has a higher melting point than an aluminum material, the cell cover 120 may not be melted by the flame ejected from the battery cell 110 and a shape of the cell cover 120 may be stably maintained. Accordingly, an effect of preventing or delaying flame propagation between the battery cells 110, a venting control effect, and the like may be excellent.

The cell cover 120 may include an insulating coating layer (not shown) on an inner surface thereof. The insulating coating layer (not shown) may be obtained by coating, applying, or attaching any one insulating material such as silicone resin, polyamide, or rubber. According to the insulating coating layer of the cell cover 120 according to the present embodiment, the insulating coating effect may be maximized with a minimum amount of coating. Also, because the insulating coating layer (not shown) is applied to the inner surface of the cell cover 120, insulation between the battery cell 110 and the cell cover 120 may be enhanced.

The cell cover 120 may be configured to surround a various number of pouch-type battery cells 110 together. For example, one cell cover 120 may be configured to surround one pouch-type battery cell 110. Alternatively, one cell cover 120 may be configured to surround two pouch-type battery cells 110 together. Alternatively, one cell cover 120 may be configured to surround three pouch-type battery cells 110 together. Alternatively, one cell cover 120 may be configured to surround a larger number of pouch-type battery cells 110 together.

The cell cover 120 may be formed to a thickness of about 0.2 t. However, the present disclosure is not limited thereto. Also, a thickness of the cell cover 120 may vary according to a portion. Also, polyimide (PI) having a thickness of about 0.05 t may be attached to both sides of the cell cover 120 for insulation.

One or more pouch-type battery cells 110 may be vertically upright in the cell cover 120.

As such, one or more pouch-type battery cells 110 and one cell cover 120 surrounding the one or more pouch-type battery cells 110 may constitute one cell unit 100. In particular, because the number of pouch-type battery cells 110 accommodated in the cell cover 120 may be adjusted by adjusting a width or the like of the cell cover 120, the cell unit 100 may be referred to as a scalable pouch unit (SPU).

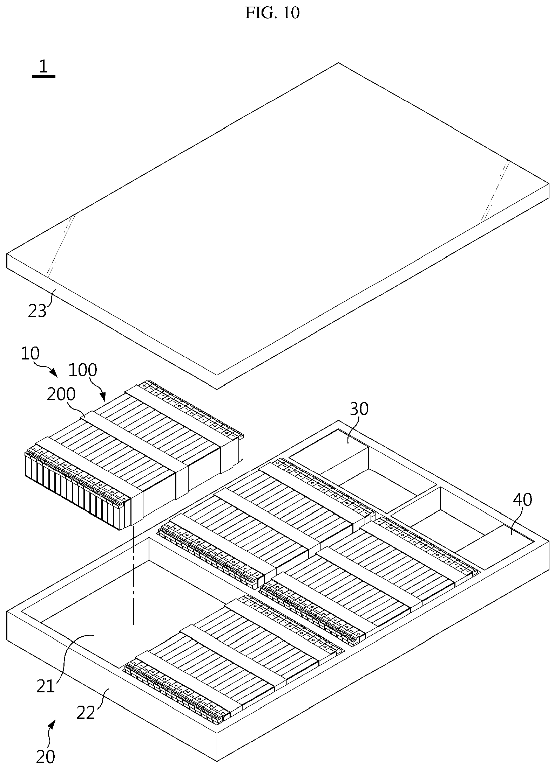

A plurality of cell units 100 may be included in the battery pack 1 described below. The plurality of cell units 100 may be stacked in at least one direction. For example, as shown in FIG. 10, the plurality of cell units 100 may be arranged side by side in the left-right direction while facing each other.

**Referring** to FIG. 1, the fixing member 200 is configured to fix a stacked state of the cell units 100 by surrounding a stack of the cell units 100.

Although the fixing member 200 may contact any of various portions of the cell unit 100, referring to FIGS. 1 and 2, for example, the fixing member 200 may be configured to close the venting hole 124 formed in the third cover portion 123 of the cell cover 120.

Referring to FIG. 1, when the fixing member 200 surrounds the stack of the cell units 100, the venting hole 124 of each cell cover 120 may be covered by the fixing member 200 without being entirely exposed to the outside. However, the fixing member 200 may be configured to cover only some of a plurality of venting holes 124 included in the stack of the cell units 100.

As shown in FIG. 2, a plurality of venting holes 124 may be formed, and one fixing member 200 may be configured to close the plurality of venting holes 124. The fixing member 200 may be configured to surround the stack of the cell units 100 to correspond to a stacking direction of the plurality of cell units 100.

Referring to FIG. 1, for example, when the plurality of cell units 100 are upright and stacked in the left-right direction (Y-axis direction of FIG. 1) to form the stack of the cell units 100, the fixing member 200 in a band shape may stably maintain a stacked state of the stack of the cell units 100.

The fixing member 200 may be formed in a quadrangular ring shape, for example, a ' 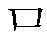 ' shape, but the present disclosure is not limited thereto. In this case, the fixing member 200 may surround an upper side, a left side, a lower side, and a right side of the stack of the cell units 100.

Referring to FIG. 1, a plurality of fixing members 200 may be provided for one stack of the cell units 100. However, the present disclosure is not limited thereto, and the number of fixing members 200 may vary. For example, one or more fixing members 200 may be provided for one stack of the cell units 100.

The fixing member 200 may be formed of a metal material such as steel to ensure rigidity of a certain level or more. Alternatively, the fixing member 200 may be formed of a material such as polymer. However, a material of the fixing member 200 is not limited thereto.

As such, when the stack of the cell units 100 is fixed by the fixing member 200, the battery cell block 10 including the cell units 100 and the fixing member 200 may be more efficiently fixed to the pack case 20 described below. That is, the battery cell block 10 according to an embodiment of the present disclosure may include a plurality of cell units 100 and one or more fixing members 200 for fixing the plurality of cell units 100, as shown in FIG. 1.

As described above, although the fixing member 200 closes the venting hole 124 formed in the third cover portion 123 of the cell cover 120 in a general situation, when a thermal event occurs, the fixing member 200 is opened by an ejection pressure or temperature of a material ejected from the venting hole 124.

In detail, because the fixing member 200 closes the venting hole 124 before an abnormal situation such as thermal runaway occurs, the fixing member 200 may prevent a foreign material such as external moisture or dust from penetrating into the battery cell 110 located in the cell cover 120 through the venting hole 124 of the cell cover 120.

However, because the fixing member 200 is opened by an ejection pressure or temperature of a material ejected from the venting hole 124 when an abnormal situation such as thermal runaway occurs, gas or flame may be discharged.

Accordingly, the fixing member 200 may have a door-type structure that is opened when a gas ejection pressure of the venting hole 124 is at a certain level or more. In another embodiment, when a gas ejection pressure or temperature of the venting hole 124 is at a certain level or more, the fixing member 200 may be ruptured or damaged. To this end, referring to FIGS. 3 and 4, a cut portion 210 or a notch portion 220 may be formed in a portion of the fixing member 200 corresponding to the venting hole 124. Referring to FIG. 3, the cut portion 210 may be formed as a perforated line. Referring to FIG. 4, the notch portion 220 may be formed as a cut groove only in a part of the fixing member 200 without completely passing through the fixing member 200.

In this case, because a ruptured or damaged position of the fixing member 200 is determined by the cut portion 210 or the notch portion 220, a venting position in the fixing member 200 may be accurately determined in an emergency situation such as thermal runaway. Accordingly, venting of gas passing through the venting hole 124 and the fixing member 200 may be smoothly performed. However, even when the cut portion 210 or the notch portion 220 is not formed in the fixing member 200, the fixing member 200 may be ruptured or damaged by gas or flame.

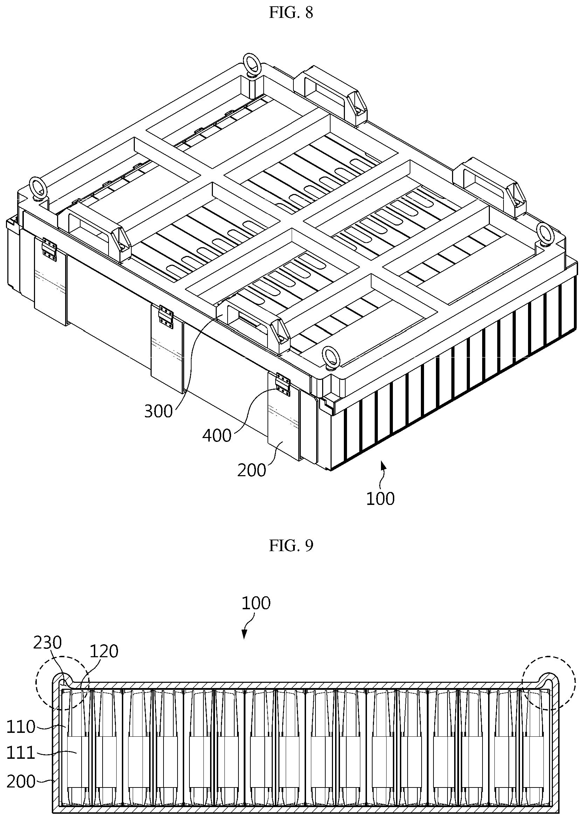

FIG. 8 is a view illustrating a modified embodiment of the battery cell block of FIG. 1. FIG. 9 is a view illustrating another modified embodiment of the battery cell block of FIG. 1.

Referring to FIG. 8, when the battery cell block 10 is accommodated in the pack case 20, a transportation jig 300 may be used to accommodate the battery cell block 10. In this case, the transportation jig 300 may be coupled to the fixing member 200. For example, as shown in FIG. 8, a fastening member 400 such as a screw may be used to fasten the transportation jig 300 and the fixing member 200. When the transportation jig 300 is fastened to the fixing member 200 by the fastening member 400, the battery cell block 10 may be transported through the transportation jig 300. Accordingly, a separate element for transporting the battery cell block 10 does not need to be added to the battery cell block 10.

In another embodiment, as marked by a dashed line of FIG. 9, a jig insertion portion 230 may be formed in the fixing member 200. The jig insertion portion 230 may be formed as a through-hole by deforming a side of the fixing member 200, for example, by convexing both ends of the fixing member 2100 upward so that a transportation jig (not shown in FIG. 9) is inserted into the jig insertion portion 230. The jig insertion portion 230 may be formed at an upper corner portion of the fixing member 200. When the transportation jig (not shown in FIG. 9) is inserted into the jig insertion portion 230, the battery cell block 10 may be transported through the transportation jig (not shown in FIG. 9).

FIG. 10 is an exploded perspective view illustrating a battery pack according to an embodiment of the present disclosure.

Hereinafter, the battery pack 1 according to an embodiment of the present disclosure will be described, but the same description as that made for the battery cell block 10 according to an embodiment of the present disclosure will be omitted. Also, the description applicable to an embodiment related to the battery cell block 10 in the description of an embodiment of the battery pack 1 may apply to the battery cell block 10.

As described above, in general, a battery pack is manufactured by accommodating battery cells in a metal case having a box shape to form a battery module and accommodating battery modules in a pack case of a battery pack. However, in this case, the overall weight and volume of the battery pack are increased and the energy density of the battery pack is reduced.

In order to solve this problem, the battery pack 1 according to an embodiment of the present disclosure is configured to directly accommodate the battery cell 110 in the pack case 20 of the battery pack 1 by removing a module case of a battery module.

Accordingly, because the battery cell 110 may be further accommodated in a space occupied by the module case of the battery module in the battery pack 1, space efficiency may be improved and battery capacity may be improved. That is, in the present disclosure, the module case of the battery module may not be included in a configuration.

However, an embodiment of using the module case is not completely excluded, and the pouch-type battery cell 110 of each embodiment of the present disclosure may be configured to be accommodated in the module case provided in the battery module when necessary.

That is, the battery module including the pouch-type battery cell 110 to which the cell cover 120 in each embodiment is coupled also falls within the scope of the present disclosure.

Even when simply described as the battery cell 110 in the specification, the battery cell 110 refers to the pouch-type battery cell 110.

The battery pack 1 according to an embodiment of the present disclosure includes the battery cell block 10 and the pack case 20. The battery cell block 10 is the same as that described above, and thus a repeated description thereof will be omitted.

The pack case 20 may have an empty inner space, and a stack of a plurality of pouch-type battery cells 110, for example, a plurality of cell units 100, may be accommodated in the inner space.

In particular, the pouch-type battery cells 110 in an embodiment of the present disclosure may be formed as the battery cell block 10 in which the plurality of cell units 100 are stacked and fixed by the fixing member 200, and may be directly seated on the pack case 20.

Referring to FIG. 10, the pack case 20 may include a lower frame 21, a side frame 22, and an upper cover 23. The pack case 20 may be formed of a plastic or metal material. In addition, the pack case 20 may include any of various casing materials for the battery pack 1 known at the time of filing the present application.

A plurality of battery cell blocks 10 are directly seated on the lower frame 21. A lower end of the cell cover 120 may be directly seated on the lower frame 21. Also, a lower end of the battery cell 110 accommodated in the cell cover 120 may also be directly seated on the lower frame 21 of the pack case 20.

The side frame 22 may extend upward from an edge of the lower frame 21, and an inner space in which the battery cell block 10 is accommodated is formed by the side frame 22.

The upper cover 23 is coupled to the side frame 22 to cover the side frame 22 and the lower frame 21. A gas channel (not shown) through which gas may move may be formed in the upper cover 23. However, the gas channel (not shown) may be formed not only in the upper cover 23 but also in at least one of the side frame 22 and the lower frame 21 when necessary.

Referring to FIG. 10, the cell cover 120 provided in the plurality of battery cell blocks 10 may be directly accommodated in the inner space of the pack case 20. The cell cover 120 partially surrounds the battery cell 110 to form the open portion 125 through which at least one side of the surrounded battery cell 110 is exposed toward the pack case 20. According to this configuration, the cooling efficiency of the battery cell block 10 may be further improved. In particular, in an embodiment of the present disclosure, because a part of each battery cell 110 may be directly exposed to the pack case 20 through the open portion 125, heat of each battery cell 110 may be effectively discharged to the outside through the pack case 20.

To this end, referring to FIG. 7, the open portion 125 may be formed between an end opposite to an end of the first cover portion 121 connected to the third cover portion 123 from among ends of the first cover portion 121 and an end opposite to an end of the second cover portion 122 connected to the third cover portion 123 from among ends of the second cover portion 122, but the present disclosure is not limited thereto.

Also, the battery pack 1 according to the present embodiment may include a control module configured to control charging and discharging of the pouch-type battery cells 110. Referring to FIG. 10, the control module may include a battery management system (BMS) 30 and a battery blocking unit 40, and may be accommodated in the pack case 20 together with the battery cell block 10.

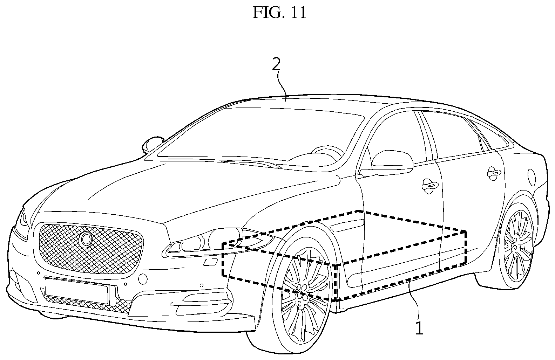

FIG. 11 is a view for describing a vehicle including a battery pack according to an embodiment of the present disclosure.

Referring to FIG. 11, a vehicle 2 according to an embodiment of the present disclosure may include at least one battery pack 1 according to each embodiment described above. Also, although not shown, the vehicle 2 according to an embodiment of the present disclosure may individually include the battery cell block 10 itself according to each embodiment described above.

The vehicle 2 includes any of various vehicles 2 provided to use electricity such as an electric vehicle or a hybrid vehicle.

It will be understood by one of ordinary skill in the art that when terms indicating directions such as upper, lower, left, and right are used, these terms are only for convenience of explanation and may vary according to a position of a target object, a position of an observer, etc.

### INDUSTRIAL APPLICABILITY

The present disclosure relates to a battery cell block, and a battery pack and a vehicle including the same, and particularly, may be used in industries related to secondary batteries.

## Claims

1. A battery cell block (10) comprising:
a plurality of cell units (100) comprising one or more pouch-type battery cells (110) and a cell cover (120) configured to surround the one or more pouch-type battery cells (110), the plurality of cell units (100) being stacked in at least one direction; and
a fixing member (200) configured to fix a stacked state of the plurality of cell units (100) by surrounding a stack of the plurality of cell units (100),
wherein a venting hole (124) through which gas is discharged is formed in the cell cover (120), **characterized in that** the fixing member (200) is configured to close the venting hole (124),
and **in that** the fixing member (200) is configured to be opened by an ejection pressure or temperature of a material ejected from the venting hole (124).

2. The battery cell block (10) according to claim 1, wherein the fixing member (200) surrounds the stack of the plurality of cell units (100) to correspond to a stacking direction of the plurality of cell units (100).

3. The battery cell block (10) according to claim 1, wherein a plurality of venting holes (124) are formed,
wherein one fixing member (200) is configured to close the plurality of venting holes (124).

4. The battery cell block (10) according to claim 3, wherein a cut portion (210) or a notch portion (220) is formed in a portion of the fixing member (200) corresponding to the venting hole (124).

5. The battery cell block (10) according to claim 1, the battery cell block (10) further comprising a jig insertion portion (230) into which a jig may be inserted is formed in the fixing member (200).

6. The battery cell block (10) according to claim 5, wherein the jig insertion portion (230) is formed at an upper corner portion of the fixing member (200).

7. The battery cell block (10) according to claim 1, wherein the cell cover (120) comprises:
a first cover portion (121) covering one side surface of at least one of the plurality of battery cells (110);
a second cover portion (122) covering the other side surface of at least one of the plurality of battery cells (110); and
a third cover portion (123) connecting the first cover portion (121) to the second cover portion (122) and covering an upper end portion of the at least one battery cell (110),
wherein the venting hole (124) is formed in the third cover portion (123),
wherein the fixing member (200) is configured to contact the third cover portion (123) and close the venting hole (124).

8. The battery cell block (10) according to claim 1, wherein the cell cover (120) is configured to support the one or more pouch-type battery cells (110) in an erected state.

9. A battery pack (1) comprising: the battery cell block (10) according to any one of claims 1 to 8; and
a pack case (20) having an inner space in which the battery cell block (10) is accommodated.

10. The battery pack (1) according to claim 9, wherein the cell cover (120) partially surrounds the pouch-type battery cell (110) to form an open portion (125) through which at least one side of the surrounded pouch-type battery cell (110) is exposed toward the pack case (20).

11. The battery pack (1) according to claim 9, comprising a control module configured to control charging and discharging of the pouch-type battery cells (110).

12. A vehicle (2) comprising the battery cell block (10) according to any one of claims 1 to 8.

13. A vehicle (2) comprising the battery pack (1) according to any one of claims 9 to 11.

## Patentansprüche

1. Batteriezellenblock (10), umfassend:
eine Mehrzahl von Zelleinheiten (100), welche eine oder mehrere Batteriezellen (110) vom Beuteltyp und eine Zellabdeckung (120) umfassen, welche dazu eingerichtet ist, die eine oder mehreren Batteriezellen (110) vom Beuteltyp zu umgeben, wobei die Mehrzahl von Zelleinheiten (100) in wenigstens einer Richtung gestapelt sind; und
ein Befestigungselement (200), welches dazu eingerichtet ist, einen gestapelten Zustand der Mehrzahl von Zelleinheiten (100) durch ein Umgeben eines Stapels der Mehrzahl von Zelleinheiten (100) zu befestigen,
wobei ein Entlüftungsloch (124), durch welches Gas abgeführt wird, in der Zellabdeckung (120) gebildet ist,
**dadurch gekennzeichnet, dass** das Befestigungselement (200) dazu eingerichtet ist, das Entlüftungsloch (124) zu verschließen, und dass das Befestigungselement (200) dazu eingerichtet ist, durch einen Ausstoßdruck oder eine Temperatur eines Materials, welches von dem Entlüftungsloch (124) ausgestoßen wird, geöffnet zu werden.

2. Batteriezellenblock (10) nach Anspruch 1, wobei das Befestigungselement (200) den Stapel der Mehrzahl von Zelleinheiten (100) umgibt, um einer Stapelrichtung der Mehrzahl von Zelleinheiten (100) zu entsprechen.

3. Batteriezellenblock (10) nach Anspruch 1, wobei eine Mehrzahl von Entlüftungslöchern (124) gebildet sind,
wobei ein Befestigungselement (200) dazu eingerichtet ist, die Mehrzahl von Entlüftungslöchern (124) zu verschließen.

4. Batteriezellenblock (10) nach Anspruch 3, wobei ein eingeschnittener Abschnitt (210) oder ein Kerbungsabschnitt (220) in einem Abschnitt des Befestigungselements (200) gebildet ist, welcher dem Entlüftungsloch (124) entspricht.

5. Batteriezellenblock (10) nach Anspruch 1, wobei der Batteriezellenblock (10) ferner einen Vorrichtungseinführabschnitt (230) umfasst, in welchen eine Vorrichtung eingeführt werden kann und welcher in dem Befestigungselement (200) gebildet ist.

6. Batteriezellenblock (10) nach Anspruch 5, wobei der Vorrichtungseinführabschnitt (230) an einem oberen Eckabschnitt des Befestigungselements (200) gebildet ist.

7. Batteriezellenblock (10) nach Anspruch 1, wobei die Zellabdeckung (120) umfasst:
einen ersten Abdeckungsabschnitt (121), welcher eine Seitenfläche von wenigstens einer aus der Mehrzahl von Batteriezellen (110) abdeckt;
einen zweiten Abdeckungsabschnitt (122), welcher die andere Seitenfläche von wenigstens einer aus der Mehrzahl von Batteriezellen (110) abdeckt; und
einen dritten Abdeckungsabschnitt (123), welcher den ersten Abdeckungsabschnitt (121) mit dem zweiten Abdeckungsabschnitt (122) verbindet und einen oberen Endabschnitt der wenigstens einen Batteriezelle (110) abdeckt,
wobei das Entlüftungsloch (124) in dem dritten Abdeckungsabschnitt (123) gebildet ist,
wobei das Befestigungselement (200) dazu eingerichtet ist, den dritten Abdeckungsabschnitt (123) zu kontaktieren und das Entlüftungsloch (124) zu verschließen.

8. Batteriezellenblock (10) nach Anspruch 1, wobei die Zellenabdeckung (120) dazu eingerichtet ist, die eine oder mehreren Batteriezellen (110) vom Beuteltyp in einem aufgerichteten Zustand zu haltern.

9. Batteriepack (1), umfassend den Batteriezellenblock (10) nach einem der Ansprüche 1 bis 8; und
ein Packgehäuse (20), welches einen inneren Raum aufweist, in welchem der Batteriezellenblock (10) aufgenommen ist.

10. Batteriepack (1) nach Anspruch 9, wobei die Zellenabdeckung (120) die Batteriezelle (110) vom Beuteltyp teilweise umgibt, um einen offenen Abschnitt (125) zu bilden, durch welchen wenigstens eine Seite der umgebenen Batteriezelle (110) vom Beuteltyp in Richtung des Packgehäuses (20) freigelegt ist.

11. Batteriepack (1) nach Anspruch 9, umfassend ein Steuerungsmodul, welches dazu eingerichtet ist, ein Laden und Entladen der Batteriezellen (110) vom Beuteltyp zu steuern.

12. Fahrzeug (2), umfassend den Batteriezellenblock (10) nach einem der Ansprüche 1 bis 8.

13. Fahrzeug (2), umfassend den Batteriepack (1) nach einem der Ansprüche 9 bis 11.

## Revendications

1. Bloc de cellules de batterie (10) comprenant :
une pluralité d'unités de cellules (100) comprenant une ou plusieurs cellules de batterie de type poche (110) et un couvercle de cellule (120) configuré pour entourer les une ou plusieurs cellules de batterie de type poche (110), la pluralité d'unités de cellules (100) étant empilées dans au moins une direction ; et
un organe de fixation (200) configuré pour fixer un état empilé de la pluralité d'unités de cellules (100) en entourant un empilement de la pluralité d'unités de cellules (100),
dans lequel un trou d'aération (124) à travers lequel du gaz est évacué est formé dans le couvercle de cellule (120), **caractérisé en ce que** l'organe de fixation (200) est configuré pour fermer le trou d'aération (124), et **en ce que** l'organe de fixation (200) est configuré pour être ouvert par une pression ou température d'éjection d'un matériau éjecté du trou d'aération (124).

2. Bloc de cellules de batterie (10) selon la revendication 1, dans lequel l'organe de fixation (200) entoure l'empilement de la pluralité d'unités de cellules (100) pour correspondre à une direction d'empilement de la pluralité d'unités de cellules (100).

3. Bloc de cellules de batterie (10) selon la revendication 1, dans lequel une pluralité de trous d'aération (124) sont formés,
dans lequel un organe de fixation (200) est configuré pour fermer la pluralité de trous d'aération (124).

4. Bloc de cellules de batterie (10) selon la revendication 3, dans lequel une partie découpée (210) ou une partie entaillée (220) est formée dans une partie de l'organe de fixation (200) correspondant au trou d'aération (124).

5. Bloc de cellules de batterie (10) selon la revendication 1, le bloc de cellules de batterie (10) comprenant en outre une partie d'insertion de gabarit (230) dans laquelle un gabarit pouvant être inséré est formé dans l'organe de fixation (200).

6. Bloc de cellules de batterie (10) selon la revendication 5, dans lequel la partie d'insertion de gabarit (230) est formée au niveau d'une partie d'angle supérieure de l'organe de fixation (200).

7. Bloc de cellules de batterie (10) selon la revendication 1, dans lequel le couvercle de cellules (120) comprend :
une première partie de couvercle (121) recouvrant une surface latérale d'au moins une parmi la pluralité de cellules de batterie (110) ;
une deuxième partie de couvercle (122) recouvrant l'autre surface latérale d'au moins une parmi la pluralité de cellules de batterie (110) ; et
une troisième partie de couvercle (123) reliant la première partie de couvercle (121) à la deuxième partie de couvercle (122) et recouvrant une partie d'extrémité supérieure de l'au moins une cellule de batterie (110),
dans lequel le trou d'aération (124) est formé dans la troisième partie de couvercle (123),
dans lequel l'organe de fixation (200) est configuré pour entrer en contact avec la troisième partie de couvercle (123) et fermer le trou d'aération (124).

8. Bloc de cellules de batterie (10) selon la revendication 1, dans lequel le couvercle de cellule (120) est configuré pour soutenir les une ou plusieurs cellules de batterie de type poche (110) dans un état érigé.

9. Bloc-batterie (1) comprenant : le bloc de cellules de batterie (10) selon l'une quelconque des revendications 1 à 8 ; et
un boîtier de bloc (20) ayant un espace intérieur dans lequel le bloc de cellules de batterie (10) est reçu.

10. Bloc-batterie (1) selon la revendication 9, dans lequel le couvercle de cellule (120) entoure partiellement la cellule de batterie de type poche (110) pour former une partie ouverte (125) à travers laquelle au moins un côté de la cellule de batterie de type poche (110) entourée est exposé vers le boîtier de bloc (20).

11. Bloc-batterie (1) selon la revendication 9, comprenant un module de commande configuré pour commander la charge et la décharge des cellules de batterie de type poche (110).

12. Véhicule (2) comprenant le bloc de cellules de batterie (10) selon l'une quelconque des revendications 1 à 8.

13. Véhicule (2) comprenant le bloc-batterie (1) selon l'une quelconque des revendications 9 à 11.
